# EUROPEAN PATENT APPLICATION

(11) **EP 1 328 093 A1**
(43) Date of publication of application: **16.07.2003**
(21) Application number: 02360030.7
(22) Date of filing: 14.01.2002
(51) Int. Cl.: H04L 12/56, H04Q 7/32

(54) **Radio relay device and portable terminal incorporating the same**

(71) Applicant: ALCATEL, 75008 Paris (FR)
(72) Inventor: Moisset, Eric, F-67230, Benfeld (DE)
(74) Representative: Rausch, Gabriele, Dr.

(57) **Abstract**

The present invention concerns a radio relay device able to act as a communication interface between two different wireless communication networks, characterised in that it consists of a portable device incorporating a first radio transceiving module (4) able to communicate with a wireless wide area network (2), a second radio transceiving module (5) able to communicate with a wireless personnal and localised area network (3), conversion and/or adaptation means (6) interconnecting said first and second modules (4 and 5) by ensuring compatible bidirectional signal transmission between them and a power supply unit (7) comprising power storage means.

## Description

The present invention is relative to the connection of at least two different networks, more particularly radio based networks, and concerns a radio relay device, a portable communication terminal incorporating such a device and a wireless communication system comprising at least one such terminal.

In the near future, two different types of networks will more and more cohabit in domestic and particularly in professionnal environments, namely personnal area networks (PAN) and vide area network (WAN).

Indeed, WAN technology, in particular as wireless local area networks, will be deployed massively in the companies and offices for data mobility purposes.

On the other hand, PANs increase in number, are based on specific communication protocols, such as for example Bluetooth, and will make use of the cellular phones as central control device for the user.

Therefore, it would be very interesting and handy for the user to be able to use a unique mobile cellular phone inside and outside the concerned company, office or home environment, while modifying as less as possible the existing components and infrastructures.

Nowadays, at least three solutions have been proposed, if not implemented, but all of them show major restrictions and/or drawbacks.

A CTS (Cordless Telephoning System) based solution will need supplementary specific infrastructures (CTS bases) in addition to the existing infrastructure. Moreover, no available product exists presently.

A solution based on dual mode DECT/GSM sets means that each user must acquire a specific handset. Moreover, no such handset with multi-cell DECT capabilities are presently available.

A corporate GSM solution is expensive and can only address very large companies.

Furthermore, in WO-A-01/33773 there is proposed a wireless cable replacement system comprising a central residential gateway with a local backbone. Said gateway is provided with an adapter in order to establish wireless communications with a first set of devices also equiped with such adapters and said backbone is provided with an adapter in order to establish wireless communications with a second set of devices also equiped with such adapters.

Nevertheless, this solution is very bulky, not flexible (central transmission mode) and does not allow the coexistence of several personnal area networks.

The present invention aims to overcome the foregoing limitations and restrictions.

Therefore, the present invention mainly concerns a radio relay device able to act as a communication interface between two different wireless communication networks, characterised in that it consists of a portable device incorporating a first radio transceiving module able to communicate with a wireless wide area network, a second radio transceiving module able to communicate with a wireless personnal and localised area network, conversion and/or adaptation means interconnecting said first and second modules by ensuring compatible bidirectional signal transmission between them and a power supply unit comprising power storage means.

The invention also concerns a portable communication terminal including such a device and a wirelles communication system comprising at least one such terminal.

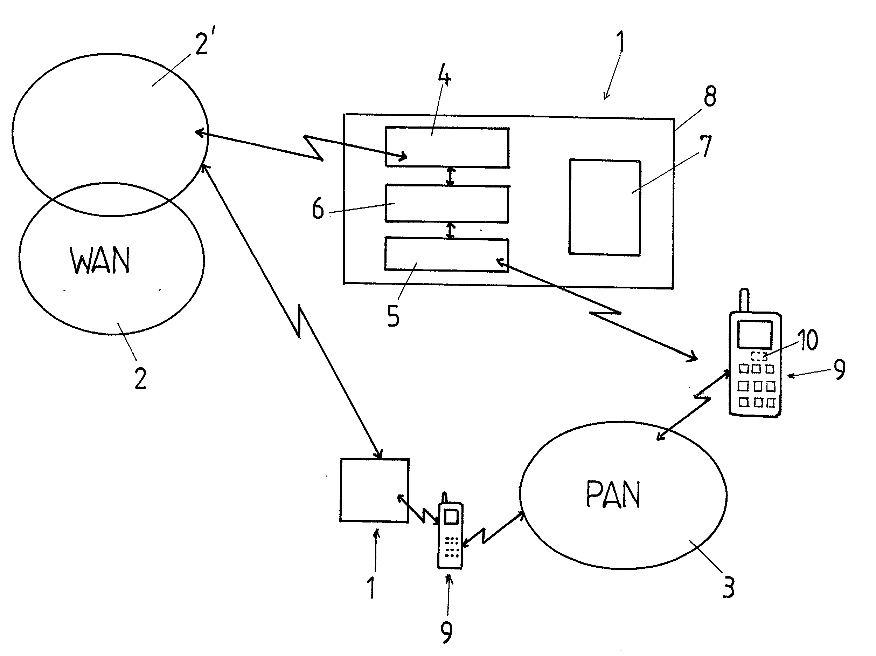

The invention will be better understood thanks to the following description explaining a preferred embodiment of the invention as a non limitative example, in connection the enclosed drawing, which represents schematiccaly a part of a communication system according to the invention.

Refering to the enclosed figure, the radio relay device or wireless transponder 1 consists of a portable device incorporating a first radio transceiving module 4 able to communicate with a wireless wide area network 2, a second radio transceiving module 5 able to communicate with a wireless personnal and localised area network 3, conversion and/or adaptation means 6 interconnecting said first and second modules 4 and 5 by ensuring compatible bidirectional signal transmission between them and a power supply unit 7 comprising power storage means.

The modules 4 and 5 and the conversion means 6 are within the knowledge of the man skilled in the art.

Although several existing communication protocols and systems could be used, the personnal area network 3 is advantageously based on Bluetooth.

In order to ensure good communication quality and efficiency, the relay device 1 should always be within a short range of the user's main tool for accessing the PAN, i.e. its cellular phone.

Thus, said relay device 1 should advantageously be "wearable" and therefore it may be mounted in a housing 8 which is of a credit card format, for example advantageously integrated in clothes, the power storage means, possibly rechargeable, being as light as possible within a reasonable range of prices.

Nevertheless, said device 1 can also be incorporated in other mobile tools or items carried or handled daily by the user (such as an electronic wallet for example).

The present invention also concerns a portable communication terminal adapted to communicate with at least three different wireless networks, characterised in that it comprises two physically independent components 1 and 9, the first component being a portable cellular phone 9 incorporating a supplementary radio transceiving module 10 able to communicate with a wireless personnal and localised area network 3 and the second component being a transponder consisting of a radio relay device 1 as described before the concerned wireless personnal area networks 3 being identical.

The cellular phone 9 may be selected within the group consisting of the GSM phones, the GPRS phones, the UMTS phones and the multistandard phones.

Preferably, the supplementary radio transceiving module 10 consists of an embedded Bluetooth transceiving module, wherefore neither design and size, nor features of the concerned mobile phone 9 will be affected.

The relay device 1 is seen by the mobile cellular phone 9 as a Bluetooth headset. The GSM/GPRS/UMTS radio interface of said phone 9 is disabled as long as the relay device 1 is inside the radio infrastructure coverage area of the WAN 2.

When a conversion is performed between the Bluetooth interface module 5 and the radio interface module 4, information is encapsulated into relevant type of frames and transmitted/received over the radio infrastructure 2' and the Bluetooth PAN 3.

The relay device of the WAN 2 benefits from the roaming and handover facilities provided by said radio infrastructure 2' (which is not the case of a Bluetooth infrastructure).

Furthermore, the present invention comprises, as partially shown on the enclosed figure, a wireless communication system including at least two different wireless networks, namely a wireless wide area network WAN and wireless personnal area network PAN, characterised in that said system comprises, as communication terminal(s) adapted to communicate with both networks (2 and 3), at least one two-part terminal 1 and 9 as described before and shown on the drawing.

Said two-part portable terminal 1 and 9 is considered by the PABX or the similar local communication controller, like a standard DECT, WLAN or similar wireless handset, provided with the same level of mobility features and services.

The personal transponder 1 is therefore part of the identification tool(s) of the user inside the company and could be used for other environments supporting other technologies.

As can be seen from the foregoing, the described inventive solution has no material impact on the existing wireless infrastructure 2', can be considered as an option, allows to limit extra-costs to PAN connection capability and provides a geographically "all round" portable terminal.

The present invention is, of course, not limited to the preferred embodiments described herein and showed on the attached drawing, changes can be made or equivalents used without departing from the scope of the invention.

## Claims

1. Radio relay device able to act as a communication interface between two different wireless communication networks, **characterised in that** it consists of a portable device incorporating a first radio transceiving module (4) able to communicate with a wireless wide area network (2), a second radio transceiving module (5) able to communicate with a wireless personnal and localised area network (3), conversion and/or adaptation means (6) interconnecting said first and second modules (4 and 5) by ensuring compatible bidirectional signal transmission between them and a power supply unit (7) comprising power storage means.

2. Radio relay device according to claim 1, **characterised in that** the personnal area network (3) is based on Bluetooth.

3. Radio relay device according to any of claims 1 and 2, **characterised in that** it is mounted in a housing (8) which is of a credit card format.

4. Portable communication terminal adapted to communicate with at least three different wireless networks, **characterised in that** it comprises two physically independent components (1 and 9), the first component being a portable cellular phone (9) incorporating a supplementary radio transceiving module (10) able to communicate with a wireless personnal and localised area network (3) and the second component being a transponder consisting of a radio relay device (1) according to anyone of claims 1 to 3, the concerned wireless personnal area networks (3) being identical.

5. Portable communication terminal according to claim 4, **characterised in that** the mobile cellular phone (9) is selected within the group consisting of the GSM phones, the GPRS phones, the UMTS phones and the multistandard phones.

6. Portable communication terminal according to anyone of claims 4 and 5, **characterised in that** the supplementary radio transceiving module (10) consists of an embedded Bluetooth transceiving module.

7. Wireless communication system including at least two different wireless networks, namely a wireless wide area network (WAN) and wireless personnal area network (PAN), **characterised in that** said system comprises, as communication terminal(s) adapted to communicate with both networks (2 and 3), at least one two-part terminal (1 and 9) according to anyone of claims 4 to 6.
